# EUROPEAN PATENT SPECIFICATION

(11) **EP 3 208 446 B1**
(45) Date of publication and mention of the grant of the patent: **09.09.2020**
(21) Application number: 17156775.3
(22) Date of filing: 17.02.2017
(51) Int. Cl.: F02C 7/18, F02C 9/18, F02C 6/08, F01D 25/02

(54) **BLEED AIR SYSTEM AND METHOD OF OPERATING THE SAME**
ZAPFLUFTSYSTEM UND VERFAHREN ZUM BETRIEB DAVON
SYSTÈME D'AIR PRÉLEVÉ ET SON PROCÉDÉ DE FONCTIONNEMENT

(30) Priority: 19.02.2016 US 201615047947
(43) Date of publication of application: 23.08.2017
(60) Divisional application: 20161167.0
(73) Proprietor: United Technologies Corporation, Farmington, CT 06032 (US)
(72) Inventor: FEULNER, Matthew R., West Hartford, CT Connecticut 06119 (US)
(74) Representative: Dehns

(56) References cited:
- EP-A1- 2 966 279
- EP-A2- 2 620 616
- US-A- 5 392 614
- US-A1- 2012 186 267
- US-A1- 2014 250 898
- US-A1- 2015 275 769

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

The engine delivers air to the aircraft for uses such as an environmental control system and anti-icing system. The delivered air is drawn from one or more places throughout the compressor section. The required air flow and pressure of the delivered air varies with aircraft operating condition. Delivering air that is higher in pressure and temperature than required results in additional fuel used by the engine to produce the air. As such, it is desired to produce air efficiently to deliver to the aircraft that matches desired pressure temperature and flow.

US 5,392,614 A discloses a bleed air system for an aircraft as set forth in the preamble of claim 1.

US 2012/186267 A1 discloses a turbine integrated bleed system and method for a gas turbine engine.

EP 2 620 616 A2 discloses bleed air systems for use with aircrafts and related methods.

US 2014/250898 A1 also discloses bleed air systems for use with aircrafts and related methods.

### SUMMARY

From a first aspect, the invention provides a bleed air system for an aircraft as recited in claim 1.

In another embodiment according to any of the previous embodiments, the bleed air system includes a heat exchanger in the bypass passage for cooling airflow through the bypass passage.

In another embodiment according to any of the previous embodiments, a valve selects airflow from one or more locations of the engine to the turbine inlet.

In another embodiment according to any of the previous embodiments, the controller is configured to control the turbocompressor to unload the compressor portion while starting the turbocompressor.

In another embodiment according to any of the previous embodiments, the airflow from the compressor discharge is directed through a relief valve back to a compressor inlet to unload the compressor portion while starting the turbocompressor.

In another embodiment according to any of the previous embodiments, the aircraft system includes an environmental control system.

In another embodiment according to any of the previous embodiments, the aircraft system includes a de-icing system.

The invention also provides a gas turbine engine assembly as recited in claim 8.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 is a schematic view of an example bleed air system.
Figure 3 is a schematic view of the example bleed air system configured to provide air from a low pressure supply.
Figure 4 is a schematic view of the example bleed air system configured to provide air from a high pressure supply.
Figure 5 is the example bleed air system configured for starting with a low pressure supply.
Figure 6 is a schematic view of the example bleed air system configured to start with a high pressure supply.
Figure 7 is a schematic view of the example bleed air system configured to provide air from an alternate supply.

### DETAILED DESCRIPTION

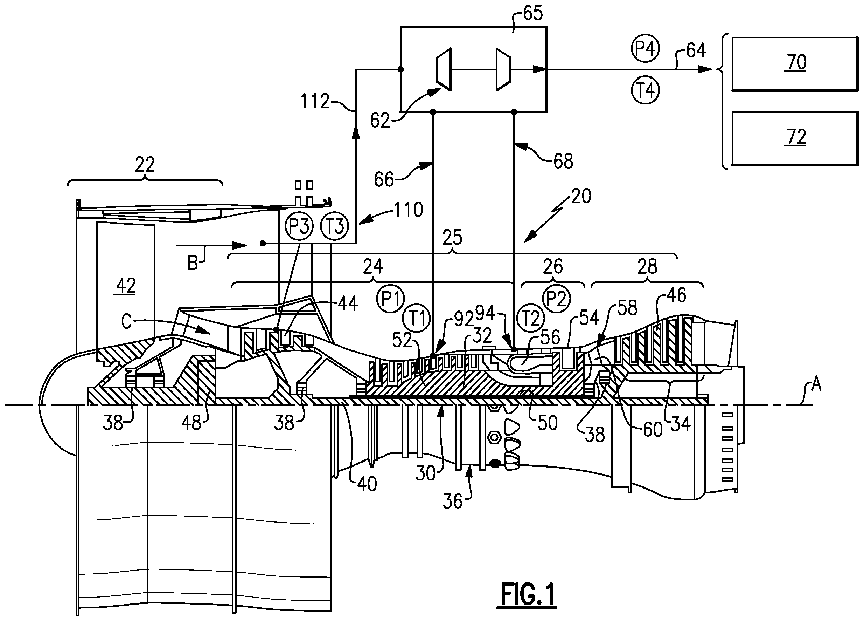

Figure 1 schematically illustrates a gas turbine engine 20. The gas turbine engine 20 is disclosed herein as a two-spool turbofan that generally incorporates a fan section 22, and a core engine 25. The core engine 25 including a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 may be connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine engine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The airflow through the core airflow path C is compressed by the low pressure compressor 44 then the high pressure compressor 52, mixed and burned with fuel in the combustor 56 to generate a high energy flow that is then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to expansion of the high energy flow. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow through the bypass flow path B due to the high bypass ratio. The fan section 22 of the engine 20 is designed for a particular flight condition -- typically cruise at about 0.8 Mach and about 35,000 feet (10.67 km). The flight condition of 0.8 Mach and 35,000 ft (10.67 km), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.5. "Low corrected fan tip speed" is the actual fan tip speed in ft/sec divided by an industry standard temperature correction of [(Tram °R) / (518.7 °R)]0.5 (where °R = 9/5 x K). The "Low corrected fan tip speed" as disclosed herein according to one non-limiting embodiment is less than about 1150 ft/second (350 m/second). It should be understood that the engine operating condition at which the example disclosed fan tip speed is measured is at takeoff.

The example gas turbine engine includes the fan 42 that comprises in one non-limiting embodiment less than about twenty-six (26) fan blades. In another non-limiting embodiment, the fan section 22 includes less than about twenty (20) fan blades. Moreover, in one disclosed embodiment the low pressure turbine 46 includes no more than about six (6) turbine rotors schematically indicated at 34. In another non-limiting example embodiment the low pressure turbine 46 includes about three (3) turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

A bleed air system 65 is associated with the gas turbine engine 20 and provides airflow to various aircraft systems. Aircraft systems can include an Environmental Control System (ECS) 70 or other aircraft systems schematically indicated at 72 such as aircraft de-icing systems or other systems that utilize airflow from the gas turbine engine 20. The example bleed air system 65 includes a turbocompressor 62 driven by airflow bled from a portion of the compressor section 24.

In the disclosed example, a first source of airflow 92 is provided within one or more stages of the high pressure compressor 52. A second source 94 of airflow is provided axially aft of an exit of the high pressure compressor 52 and is schematically indicated to be located at a position around the combustor 56. A third source 110 provides airflow from an alternate source such as air from the bypass flow path B or from the low pressure compressor 44. The first source 92 feeds a first inlet 66 to the bleed air systems 65. The second source 94 feeds a second inlet 68 to the bleed air system 65. The third source 110 feeds a third inlet 112 to the bleed air systems 65. In this example, the first source 92 provides airflow at a first pressure P1 and a first temperature T1. The second source provides airflow at a second pressure P2 at a second temperature T2. The second pressure P2 and second temperature T2 are greater than the first pressure P1 and first temperature T1. The third source 110 provides airflow at a third pressure P3 at a third temperature T3. In the disclosed example, the third pressure P3 and the third temperature T3 is less than both the first and second pressures P1, P2 and the first and second temperatures T1 and T2.

The turbocompressor 62 is selectively supplied airflow through the first, second and third inlets 66, 68 and 112 to tailor the pressure and temperature of airflow exhausted through an outlet passage 64 to the aircraft systems such as the ECS 70 and other aircraft systems schematically indicated at 72.

Airflow to the aircraft systems is therefore provided at a fourth pressure P4 and fourth temperature T4, that may be different than the pressures P1, P2 and P3 and the temperatures T1, T2 and T3. It should be understood that the pressures P1, P2, P3 and P4 and temperatures T1, T2, T3 and T4 will vary depending on engine operating conditions and demands from each aircraft system 70, 72.

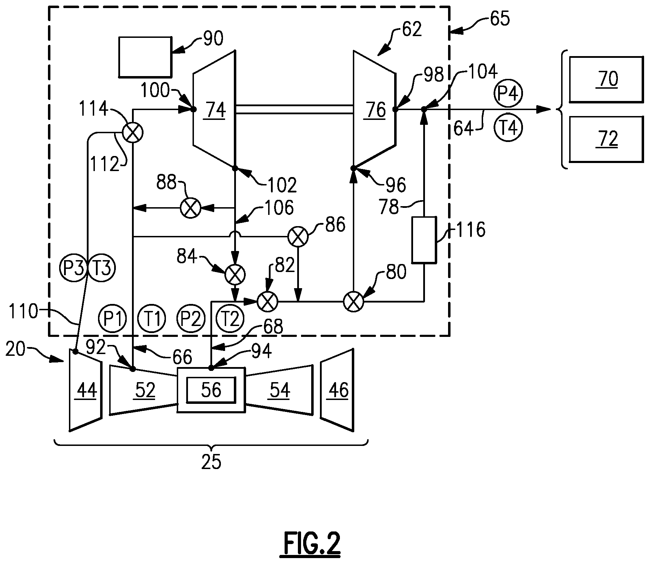

Referring to Figure 2, the example bleed air system 65 includes the turbocompressor 62. The turbocompressor 62 includes a compressor portion 74 that is mechanically coupled to a turbine portion 76. Rotation of the turbine portion 76 drives the compressor portion 74. The compressor portion 74 is fed airflow through a compressor inlet 100 and exhausts airflow through a compressor discharge 102. The turbine portion 76 receives airflow through a turbine inlet 96 and exhausts airflow through the turbine discharge 98. The turbine discharge 98 is in communication with the outlet passage 64 that provides airflow to the aircraft system 70, 72. The turbocompressor 62 conditions incoming airflow from the first and second inlets 66, 68 to provide outgoing airflow at the desired pressure P4 and temperature T4 to the aircraft systems 70, 72.

The compressor portion 74 receives air from the first source 92 through the first inlet 66. The turbine portion 76 receives air from through the second inlet 68 from the second source 94 or from the first inlet 66 and first source 92. Airflow through the compressor 74 is routed through various valves to either mix with airflow through the second inlet 68 or exhaust the airflow to unload the compressor portion 74. In an example bleed air system 65 that falls outside the scope of the claims, all air that is communicated to the aircraft systems from the turbocompressor 62 is flowed through the turbine portion 76. Air from the turbine discharge 98 may be mixed with air that bypasses the turbine 76 through the turbine bypass passage 78.

Airflow from the third source 110 is communicated only to the compressor portion 74 through the third inlet 112. Airflow through the third inlet 112 is used to provide a load on the compressor portion 74 to balance operation of the turbine portion 76.

A high pressure source control valve 82 is provided in the second inlet 68 to selectively control the flow of airflow from the second source 94 to the turbine portion 76. A flow control valve 80 is provided prior to the bypass passage 78 to selectively control airflow to the turbine inlet 96 and a bypass passage 78. Airflow through the bypass passage 78 is communicated to a point 104 that is after the turbine discharge 98. Airflow through the bypass passage 78 is not conditioned by operation of the turbine portion 76 and is mixed with airflow from the turbine portion 76 to provide the desired pressure and temperature of airflow to the aircraft systems 70, 72. A heat exchanger 116 may be provided to cool bypass airflow prior to mixing with airflow from the turbine discharge 98.

A first control valve 84 and a second control valve 86 are provided to prevent airflow from the higher pressure second source from flowing back into the compressor 74 or first source 92. A third control valve 114 controls airflow from the third source 110 through the third inlet 112. A controller 90 is provided that controls the valves 80, 82, 88 and 114 to generate the desired pressure P4 and temperature T4 in view of current pressures P1, P2 and P3 and temperatures T1, T2 and T3 at each of the first and second sources 92, 94.

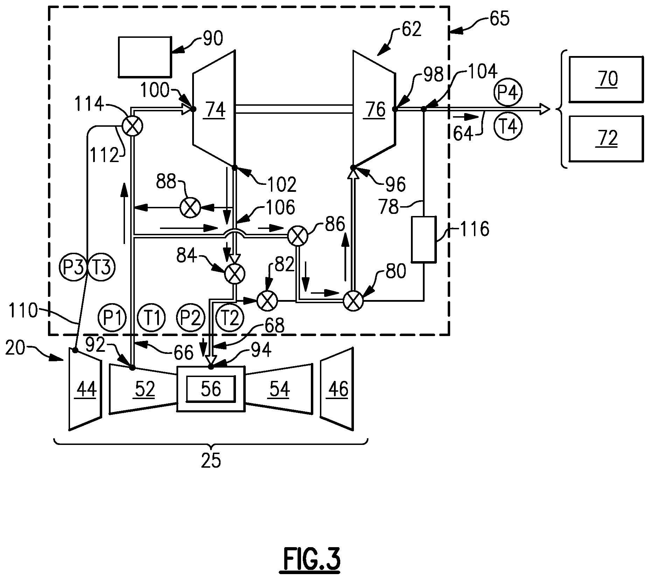

Referring to Figure 3, the example bleed air system 65 is shown configured to provide airflow to the turbine portion 76 from the first source 92 through the first inlet 66. The Figures throughout this disclosure utilize double lined arrows to schematically indicate airflow through a passage and single line arrows to indicate a passage without airflow.

In the configuration shown in Figure 3, the high pressure shut off valve 82 is in a condition that blocks airflow from the second inlet 68 to the turbine inlet 96. The relief valve 88 is in a closed position such that airflow exiting the compressor portion 74 is communicated back through a first passage 106, through the second inlet 68 to the second source 94. The third control valve 114 is closed to stop airflow from the third source 110. The airflow communicated from the compressor portion 74 is provided back to the core engine 25 to increase operational efficiency. No air flow from the second source is communicated to the compressor portion 74 or the turbine portion 76. The second control valve 86 is in an open condition that communicates airflow from the first source 92 through the flow control valve 80 and to the turbine inlet 96. Airflow exiting the compressor portion 74 is not mixed with airflow communicated to the turbine inlet 96. Instead, air flow from the compressor portion 74 is fed directly through the first passage 106 to the second inlet passage 68 back to the area surrounding the combustor 56. The first passage 106 in this configuration becomes a return air passage that communicates compressor discharge air back to the core engine 25.

In the disclosed example, compressor discharge air is communicated back through the second inlet passage 68. However, this configuration could be reversed with airflow being drawn from the second inlet passage 68 and return through the first inlet passage 66.

Airflow communicated to the turbine portion 76, expands through the turbine portion 76 to achieve a desired pressure and temperature that is communicated to the aircraft systems 70, 72.

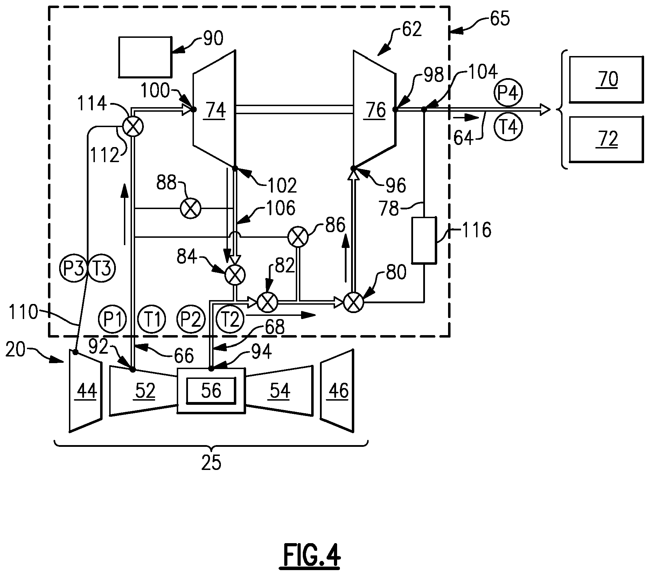

Referring to Figure 4, the bleed air system 65 is schematically illustrated to show operation of the turbine portion 76 utilizing airflow communicated from the second source 94 through the second inlet 68. In the disclosed configuration shown in Figure 4, the high pressure shutoff valve 82 is in an open position such that airflow through the second inlet 68 is communicated through the flow control valve 80 to the turbine inlet 96. Airflow from the first inlet 66 is communicated to the compressor portion 74 and exhausted through the compressor discharge 102, through the first control valve 84 and mixed with the air from the second source 94. The second control valve 86 is in a closed condition such that airflow directly from the first inlet 66 is not communicated to the second inlet 68 and thereby not to the turbine inlet 96. The third control valve 114 is in the closed position such that no airflow from the third source 110 is provided to the compressor portion 74.

In the configuration shown in Figure 4, the turbine portion 76 is driven by the higher pressure P2, higher temperature T2 airflow provided by the second source 94 through the second inlet 68. Lesser pressure and lesser temperature airflow outlet from the compressor 74 may be mixed with airflow through the second inlet 68 communicated to the turbine inlet 96 and the turbine portion 76. Airflow from the second inlet 68 is communicated through the turbine portion 76 where it is expanded to drive the turbine and then exhausted at the desired pressure and temperature through the outlet 64 to the aircraft system 70, 72.

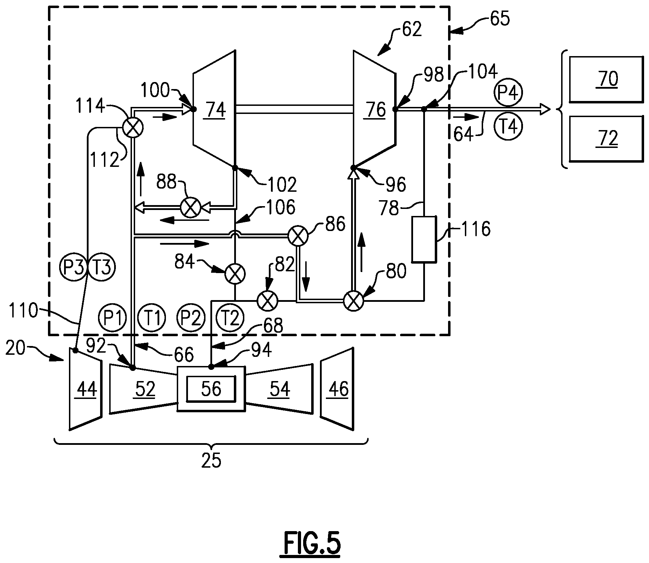

Referring to Figure 5, the example bleed air system 65 is illustrated in the low pressure starting condition, airflow from the first inlet 66 is communicated to both the compressor inlet 100 and the turbine inlet 96. Airflow exiting the compressor discharge 102 is recirculated through the relief valve 88 such that the compressor portion 74 is unloaded. The turbine inlet 96 is fed airflow from the first inlet 66 through the second control valve 86 and the flow control valve 80. Air is then exhausted through the turbine discharge 98 to the aircraft systems 70, 72.

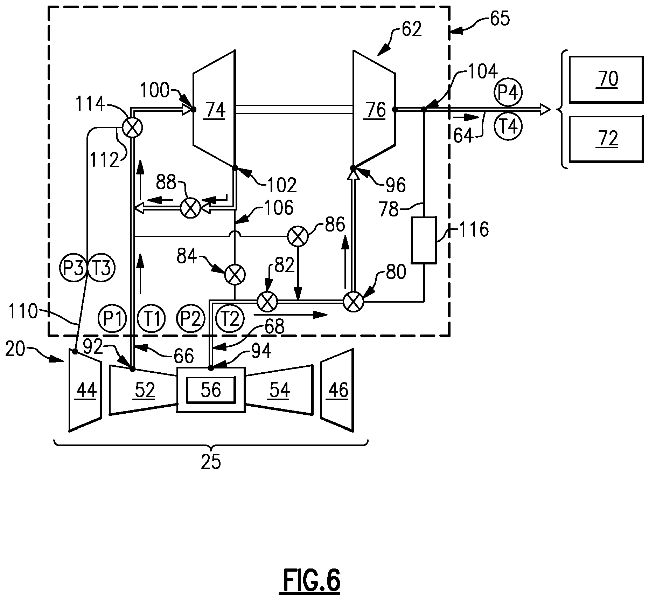

Referring to Figure 6, the example bleed air system 65 is configured in a high pressure starting condition where a high pressure P2 and high temperature T2 airflow is provided from the second inlet 68 to the turbine portion 76. Airflow from the first inlet 66 is communicated to the compressor portion 74 and fed through the relief valve 88 such that the compressor portion 74 is unloaded. In the unloaded condition, the airflow is not utilized for the aircraft systems 70, 72. Airflow through the second inlet 68 is fed directly to the turbine inlet 96 and turbine portion 76. In this configuration, the first control valve and the second control valve 84, 86 are in a closed position. The high pressure shutoff valve 82 is in an open position to allow airflow from the second inlet 68 to flow into the turbine portion 76. Airflow from the second inlet 68 expands through the turbine portion 76 to reduce pressure and temperature to the desired pressure P4 and temperature T4 desired for the aircraft systems 70, 72.

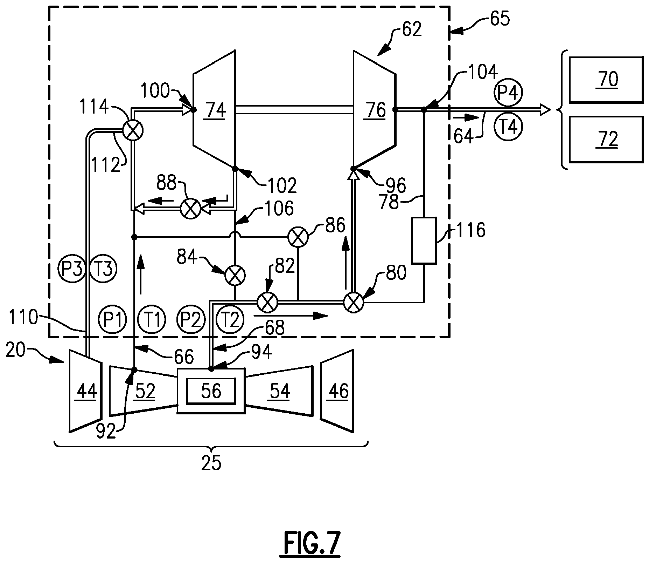

Referring to Figure 7, the example bleed air system 65 is configured to supply airflow to the compressor portion 74 from the third source 110 through the third inlet 112. Airflow from the third source 110 is communicated to the compressor portion 74 and recirculated back through the relief valve 88 such that the compressor portion 74 is unloaded and using airflow either from the bypass flow path B, the low pressure compressor 44 (Figure 1) or a combination of bypass air and air from the low pressure compressor 44. Moreover, it is also within the contemplation of this application to draw airflow for the third source 110 from other locations within the engine 20. The purpose of airflow provided in the configuration illustrated in Figure 7 is to load the compressor portion 74 enough to balance operation of the turbine portion 76. Airflow circulating through the compressor portion 74 is not utilized for the aircraft systems 70, 72. Airflow through the second inlet 68 is fed directly to the turbine inlet 96 and turbine portion 76. In this configuration, the first control valve and the second control valve 84, 86 are in a closed position. The third control valve 114 is open to provide airflow through the third inlet 112. The high pressure shutoff valve 82 is in an open position to allow airflow from the second inlet 68 to flow into the turbine portion 76. Airflow from the second inlet 68 expands through the turbine portion 76 to reduce pressure and temperature to the desired pressure P4 and temperature T4 desired for the aircraft systems 70, 72.

The example bleed air system 65 provides airflow to the aircraft systems 70, 72 that utilize bleed air communicated from the turbine portion 76, but not directly from the compressor portion 74. The turbocompressor 62 is capable of operation in very low flow conditions, whereas the compressor portion 74 is not efficient during these low flow conditions. Because airflow is supplied from the turbocompressor 62 from the turbine portion 76, a smaller compressor portion 74 can be utilized. The smaller compressor portion 74 is operated over relatively high pressure ratio and therefore can be much smaller than a traditional turbocompressor utilized in a traditional bleed air system.

Although an example embodiment has been disclosed, a worker of ordinary skill in this art would recognize that certain modifications would come within the scope of the claims.

## Claims

1. A bleed air system (65) for an aircraft comprising:
a turbocompressor (62) including a turbine portion (76) coupled to drive a compressor portion (74), the compressor portion (74) including a compressor inlet (100) and a compressor air discharge (102), the turbine portion (76) including a turbine inlet (96) and a turbine discharge (98);
a passage (66) delivering air to the compressor inlet (100) from one or more locations of an engine (20);
a passage (68) delivering air to the turbine inlet (96) from at least one or more locations of the engine (20);
a passage (106) receiving air from the compressor discharge (102) selectively delivered to one or more locations of the engine (20);
an outlet passage (64) receiving air from the turbine discharge (98) communicating airflow to an aircraft system (70, 72); and
a controller (90) to direct inlet and discharge airflow of the compressor portion (74) and the turbine portion (76) to control operation of the turbocompressor (62); **characterised in that** the bleed air system further comprises:
a passage communicating airflow from the compressor discharge (102) to the turbine inlet (96);
a first control valve (84) controlling airflow from the compressor discharge (102) to one or more locations of the engine (20) and the turbine inlet (96); and
a flow selector (80) for directing air to bypass the turbocompressor or turbine portion (76) through a bypass passage (78) to mix with airflow from the turbine discharge (98) into the outlet passage (64) to the aircraft system (70, 72).

2. The bleed air system as recited in claim 1, including a heat exchanger (116) in the bypass passage (78) for cooling airflow through the bypass passage (78).

3. The bleed air system as recited in claim 1 or 2, including a valve (80, 82, 86) selecting airflow from one or more locations of the engine (20) to the turbine inlet (96).

4. The bleed air system as recited in any preceding claim, wherein the controller (90) is configured to control the turbocompressor (62) to unload the compressor portion (74) while starting the turbocompressor (62).

5. The bleed air system as recited in claim 4, wherein the airflow from the compressor discharge (102) is directed through a relief valve (88) back to a compressor inlet (100) to unload the compressor portion (74) while starting the turbocompressor (62).

6. The bleed air system as recited in any preceding claim, wherein the aircraft system comprises an environmental control system (70).

7. The bleed air system as recited in any preceding claim, wherein the aircraft system comprises a de-icing system (72).

8. A gas turbine engine assembly (20) comprising:
a core engine (25) including a compressor section (24) disposed about an engine axis (A); and
a bleed air system (65) for supplying airflow from the compressor section (24) to at least one aircraft system (70, 72), wherein said bleed air system (65) is the bleed air system (65) as recited in any preceding claim, said engine being said core engine (25), and said passage (68) delivering air to the turbine inlet (96) from at least one or more locations of the engine (20) delivering air from at least one or more locations of the compressor section (24).

## Patentansprüche

1. Zapfluftsystem (65) für ein Flugzeug, umfassend:
einen Turboverdichter (62), der einen Turbinenabschnitt (76) beinhaltet, der zum Antreiben eines Verdichterabschnitts (74) gekoppelt ist, wobei der Verdichterabschnitt (74) einen Verdichtereinlass (100) und einen Verdichterluftauslass (102) beinhaltet, wobei der Turbinenabschnitt (76) einen Turbineneinlass (96) und einen Turbinenauslass (98) beinhaltet;
einen Durchgang (66), der Luft zu dem Verdichtereinlass (100) von einer oder mehreren Stellen eines Triebwerks (20) liefert;
einen Durchgang (68), der Luft zu dem Turbineneinlass (96) von mindestens einer oder mehreren Stellen des Triebwerks (20) liefert;
einen Durchgang (106), der Luft von dem Verdichterauslass (102), die selektiv zu einer oder mehreren Stellen des Triebwerks (20) geliefert wird, aufnimmt;
einen Auslassdurchgang (64), der Luft von dem Turbinenauslass (98) aufnimmt und einen Luftstrom zu dem Flugzeugsystem (70, 72) kommuniziert; und
eine Steuerung (90) zum Leiten des Einlass- und Auslassluftstroms des Verdichterabschnitts (74) und des Turbinenabschnitts (76) zum Steuern des Betriebs des Turboverdichters (62), **dadurch gekennzeichnet, dass** das Zapfluftsystem ferner umfasst:
einen Durchgang, der einen Luftstrom von dem Verdichterauslass (102) zu dem Turbineneinlass (96) kommuniziert;
ein erstes Steuerventil (84), das einen Luftstrom von dem Verdichterauslass (102) zu einer oder mehreren Stellen des Triebwerks (20) und dem Turbineneinlass (96) kommuniziert; und
einen Stromwähler (80) zum Leiten von Luft, um den Turboverdichter oder den Turbinenabschnitt (76) durch einen Umgehungsdurchgang (78) zu umgehen, um sich mit einem Luftstrom von dem Turbinenauslass (98) in den Auslassdurchgang (64) zu dem Flugzeugsystem (70, 72) zu vermischen.

2. Zapfluftsystem nach Anspruch 1, das einen Wärmetauscher (116) in dem Umgehungsdurchgang (78) zum Kühlen des Luftstroms durch den Umgehungsdurchgang (78) beinhaltet.

3. Zapfluftsystem nach Anspruch 1 oder 2, das ein Ventil (80, 82, 86) beinhaltet, das einen Luftstrom von einer oder mehreren Stellen des Triebwerks (20) zu dem Turbineneinlass (96) auswählt.

4. Zapfluftsystem nach einem der vorangehenden Ansprüche, wobei die Steuerung (90) dazu konfiguriert ist, den Turboverdichter (62) zu steuern, um den Verdichterabschnitt (74) zu entladen, während der Turboverdichter (62) gestartet wird.

5. Zapfluftsystem nach Anspruch 4, wobei der Luftstrom von dem Verdichterauslass (102) durch ein Entspannungsventil (88) zurück zu einem Verdichtereinlass (100) geleitet wird, um den Verdichterabschnitt (74) zu entladen, während der Turboverdichter (62) gestartet wird.

6. Zapfluftsystem nach einem der vorangehenden Ansprüche, wobei das Flugzeugsystem ein Umgebungssteuersystem (70) umfasst.

7. Zapfluftsystem nach einem der vorangehenden Ansprüche, wobei das Flugzeugsystem ein Enteisungssystem (72) umfasst.

8. Gasturbinentriebwerksbaugruppe (20), umfassend:
ein Kerntriebwerk (25), das einen Verdichterabschnitt (24) beinhaltet, der um eine Triebwerksachse (A) angeordnet ist; und
ein Zapfluftsystem (65) zum Zuführen eines Luftstroms von dem Verdichterabschnitt (24) zu mindestens einem Flugzeugsystem (70, 72), wobei das Zapfluftsystem (65) das Zapfluftsystem (65) nach einem der vorangehenden Ansprüche ist, wobei das Triebwerk das Kerntriebwerk (25) ist und der Durchgang (68), der Luft zu dem Turbineneinlass (96) von mindestens einer oder mehreren Stellen des Triebwerks (20) liefert, Luft von mindestens einer oder mehreren Stellen des Verdichterabschnitts (24) liefert.

## Revendications

1. Système d'air prélevé (65) pour un aéronef comprenant :
un turbocompresseur (62) comportant une partie turbine (76) couplée pour entraîner une partie compresseur (74), la partie compresseur (74) comportant une entrée de compresseur (100) et une sortie d'air de compresseur (102), la partie turbine (76) comportant une entrée de turbine (96) et une sortie de turbine (98) ;
un passage (66) acheminant de l'air vers l'entrée de compresseur (100) depuis un ou plusieurs emplacements d'un moteur (20) ;
un passage (68) acheminant de l'air vers l'entrée de turbine (96) depuis au moins un ou plusieurs emplacements du moteur (20) ;
un passage (106) recevant de l'air depuis la sortie de compresseur (102) acheminé sélectivement vers un ou plusieurs emplacements du moteur (20) ;
un passage de sortie (64) recevant de l'air depuis la sortie de turbine (98) communiquant un écoulement d'air à un système d'aéronef (70, 72) ; et
un dispositif de commande (90) destiné à diriger l'écoulement d'air d'entrée et de sortie de la partie compresseur (74) et de la partie turbine (76) pour commander le fonctionnement du turbocompresseur (62) ; **caractérisé en ce que** le système d'air prélevé comprend en outre :
un passage communiquant l'écoulement d'air de la sortie de compresseur (102) à l'entrée de turbine (96) ;
une première soupape de commande (84) commandant l'écoulement d'air de la sortie de compresseur (102) vers un ou plusieurs emplacements du moteur (20) et l'entrée de turbine (96) ; et
un sélecteur de débit (80) pour diriger l'air devant contourner le turbocompresseur ou la partie turbine (76) à travers un passage de dérivation (78) afin de permettre le mélange avec l'écoulement d'air de la sortie de turbine (98) dans le passage de sortie (64) vers le système d'aéronef (70, 72) .

2. Système d'air prélevé selon la revendication 1, comportant un échangeur de chaleur (116) dans le passage de dérivation (78) pour refroidir l'écoulement d'air à travers le passage de dérivation (78).

3. Système d'air prélevé selon la revendication 1 ou 2, comportant une soupape (80, 82, 86) sélectionnant l'écoulement d'air depuis un ou plusieurs emplacements du moteur (20) vers l'entrée de turbine (96).

4. Système d'air prélevé selon une quelconque revendication précédente, dans lequel le dispositif de commande (90) est configuré pour commander le turbocompresseur (62) afin de décharger la partie compresseur (74) pendant le démarrage du turbocompresseur (62).

5. Système d'air prélevé selon la revendication 4, dans lequel l'écoulement d'air de la sortie de compresseur (102) est dirigé à travers une soupape de décharge (88) vers une entrée de compresseur (100) pour décharger la partie compresseur (74) pendant le démarrage du turbocompresseur (62).

6. Système d'air prélevé selon une quelconque revendication précédente, dans lequel le système d'aéronef comprend un système de contrôle environnemental (70).

7. Système d'air prélevé selon une quelconque revendication précédente, dans lequel le système d'aéronef comprend un système de dégivrage (72).

8. Ensemble de moteur à turbine à gaz (20) comprenant :
un moteur central (25) comportant une section de compresseur (24) disposée autour d'un axe de moteur (A) ; et
un système d'air prélevé (65) pour fournir un écoulement d'air depuis la section de compresseur (24) vers au moins un système d'aéronef (70, 72), dans lequel ledit système d'air prélevé (65) est le système d'air prélevé (65) selon une quelconque revendication précédente, ledit moteur étant ledit moteur central (25), et ledit passage (68) acheminant de l'air vers l'entrée de turbine (96) depuis au moins un ou plusieurs emplacements du moteur (20) acheminant de l'air depuis au moins un ou plusieurs emplacements de la section de compresseur (24).
